# FASCICULE DE BREVET EUROPEEN

(11) **EP 2 432 302 B1**
(45) Date de publication et mention de la délivrance du brevet: **13.11.2013**
(21) Numéro de dépôt: 11181428.1
(22) Date de dépôt: 15.09.2011
(51) Int. Cl.: G06F 21/86, H05K 1/16, H05K 1/02, G06F 21/00

(54) **Dispositif de protection d'un circuit imprimé électronique**
Schutzvorrichtung für einen gedruckten elektronischen Schaltkreis
Device for protecting an electronic printed circuit board.

(30) Priorité: 15.09.2010 FR 1057381
(43) Date de publication de la demande: 21.03.2012
(73) Titulaire: Compagnie Industrielle et Financière d'Ingénierie "Ingenico", 92200 Neuilly sur Seine (FR)
(72) Inventeur: Rossi, Laurent, 28100 Dreux (FR); Schang, Bernard, 78320 Le Mesnil Saint Denis (FR)
(74) Mandataire: Le Saux, Gaël

(56) Documents cités:
- EP-A1- 1 804 557
- WO-A2-2010/007314
- US-B1- 7 015 823

## Description

### 1 DOMAINE DE L'INVENTION

La présente invention se rapporte au domaine de la protection des dispositifs de lecture de carte mémoire. Des dispositifs de lecture de carte mémoire sont notamment employés dans de nombreux appareils tels que des terminaux de paiement, des dispositifs d'authentification ou d'identification ou encore des dispositifs de lecture de contenus.

La présente invention se rapporte plus particulièrement à la sécurisation des circuits imprimés électroniques multicouches de tels dispositifs de lecture de carte mémoire, afin de les protéger contre toutes intrusions de tiers malintentionnés.

### 2 ART ANTERIEUR

Les appareils qui intègrent des dispositifs de lecture de carte mémoire, tels que des terminaux de paiement, comprennent de nombreux dispositifs de sécurisation et mettent en oeuvre des méthodes permettant d'assurer que les appareils sont utilisés conformément aux usages pour lesquels ils ont été prévus et respectent des normes de sécurité qui sont imposés par des organismes de certification.

Par exemple, dans le domaine des terminaux de paiement pour carte de paiement, les fabricants ont développé des solutions de protection du ou des circuit(s) imprimé(s) électronique(s) multicouche(s) (en anglais, PCB pour « *Printed Circuit Board* ») des terminaux de paiements.

Plus précisément, un circuit imprimé est un support, en général une plaque, permettant de relier électriquement un ensemble de composants électroniques entre eux, afin de réaliser un circuit électronique complexe. Cette plaque est constituée d'un assemblage d'une ou plusieurs fines couches de cuivre séparées par un matériau isolant. Les couches de cuivre sont gravées par un procédé chimique pour obtenir un ensemble de pistes, terminées par des pastilles. Le circuit imprimé est souvent recouvert d'une couche de vernis coloré qui protège les pistes de l'oxydation et d'éventuels courts-circuits (prepreg + FR4). Les pistes relient électriquement différentes zones du circuit imprimé. Les pastilles, une fois perforées, établissent une liaison électrique, soit entre les composants soudés à travers le circuit imprimé, soit entre les différentes couches de cuivre (technique dite des « vias »). Dans certains cas, des pastilles non perforées servent à souder des composants montés en surface.

Malheureusement, des détériorations de circuits imprimés électroniques multicouches ont été constatées. Ces détériorations prennent la forme de perçage, de grattage ou tout autre technique intrusive, visant à court-circuiter, couper, espionner, etc., un circuit imprimé.

Par exemple, une détérioration peut correspondre à la coupure d'une piste du circuit imprimé d'un terminal de paiement afin d'annihiler l'envoi d'informations visant à déclencher le mode « attaque » du processeur sécurisé d'un terminal de paiement.

Afin de protéger le circuit imprimé électronique multicouche, des solutions de protection ont été développées.

Une première protection consiste à introduire une sorte de grillage (en anglais, « wire mesh ») avec déclenchement sur niveaux électriques. Il s'agit de fines pistes adjacentes couvrants la totalité de la partie à protéger. Par exemple une piste peut être reliée à VCC et l'autre à GND, un perçage de ce « wire mesh » peut entrainer la coupure de l'une ou de l'autre liaison qui sera détectée, voire d'un court circuit entre les deux pistes qui sera aussi détecté. De multiples variations de ce dispositif peuvent être utilisées. Les détections peuvent être réalisées sur des niveaux de tensions ou sur la conformité de signaux transitant sur ces pistes.

Le document WO 2010/007314 divulgue notamment une solution de protection à pistes conductrices comprenant un capteur de position capacitif détectant pour chaque piste conductrice une variation de capacité vue par la piste.

Une deuxième protection consiste à introduire un grillage similaire à la première solution décrite précédemment, et à comparer les caractéristiques de tension d'un signal envoyé à une extrémité du grillage et les caractéristiques d'un signal reçu à l'autre extrémité.

L'inconvénient de ces solutions réside dans le fait qu'entre les différentes pistes il existe un espace aussi minime soit il qui rendent possible un éventuel court-circuit ou encore un perçage, sans déclenchement sur un niveau électrique ou encore sans modifications des caractéristiques des signaux reçus à l'extrémité du grillage par rapport aux caractéristiques du signal émis à une autre extrémité.

Ainsi, à ce jour, les inventeurs n'ont identifié aucune solution simple déjà existante permettant une protection efficace d'un circuit imprimé électronique multicouche contre toutes intrusions de tiers malintentionnés.

### 1 RESUME DE L'INVENTION

L'invention ne présente pas ces inconvénients de l'art antérieur. En effet, l'invention concerne un dispositif de protection d'un circuit imprimé électronique, ledit circuit imprimé comprenant au moins deux couches, un tel dispositif comprenant :
- au moins un support capacitif disposé sur une surface d'une couche dudit circuit imprimé, ledit support capacitif étant configuré pour délivrer une capacité de référence;
- un microprocesseur de mesure capacitive relié électriquement audit au moins un support capacitif, ledit microprocesseur étant configuré pour détecter une variation de capacité dudit au moins un support capacitif ;
- des moyens de transmission d'une information représentative de ladite variation de capacité, lorsqu'une valeur absolue d'une différence entre ladite capacité mesurée et ladite capacité de référence excède un seuil prédéterminé.

Selon l'invention, un tel dispositif comprend en outre :
- au moins une partie conductrice répartie uniformément sur une couche d'isolant, l'ensemble comprenant la partie conductrice et la couche d'isolant formant ledit support capacitif présentant un champ électrique uniforme.

Selon un mode de réalisation particulier, ledit dispositif de protection utilise un support (wire mesh) existant et réalise une mesure de capacité sur ledit support.

Ainsi, il n'est pas nécessaire d'apporter des modifications au circuit pour mettre en oeuvre une protection.

Selon une caractéristique particulière de l'invention, ledit dispositif de protection comprend en outre des moyens de calibrage délivrant ladite capacité de référence.

Ainsi, il est possible, par la suite de mesurer une variation par rapport à cette référence.

Selon une caractéristique particulière, ledit dispositif de protection comprend en outre un système de compensation environnemental modifiant ladite capacité de référence en fonction d'un critère prédéterminé.

Selon un mode de réalisation particulier, ledit au moins un support capacitif est disposé sur une couche interne dudit circuit imprimé.

Ainsi, l'invention offre une protection au sein même du circuit imprimé.

Selon une caractéristique particulière, ledit au moins un support capacitif est déployé selon un plan plein.

Selon une caractéristique particulière ledit au moins un support capacitif est déployé selon un treillis.

Selon un autre aspect, l'invention concerne également un procédé de protection d'un circuit imprimé électronique, ledit circuit imprimé comprenant au moins deux couches, un tel procédé comprenant :
- une étape de disposition d'au moins un support capacitif sur une surface d'une couche dudit circuit imprimé, ledit support capacitif étant configuré pour délivrer une capacité de référence;
- une étape de mesure capacitive mise en oeuvre par un microprocesseur de mesure capacitive relié électriquement audit au moins un support de mesure capacitive, ledit microprocesseur étant configuré pour détecter une variation de capacité dudit au moins un support capacitif ;
- une étape de transmission d'une information représentative de ladite variation de capacité, lorsqu'une valeur absolue d'une différence entre ladite capacité mesurée et ladite capacité de référence excède un seuil prédéterminé.

Selon l'invention, l'étape de disposition comprenant en outre :
- une étape de disposition d'au moins une partie conductrice répartie uniformément sur une couche d'isolant, l'ensemble comprenant la partie conductrice et la couche d'isolant formant ledit support capacitif présentant un champ électrique uniforme.

Selon une caractéristique particulière, ledit procédé de protection comprend en outre une étape de calibrage délivrant ladite capacité de référence.

Selon une autre forme, l'invention se rapporte à un terminal de paiement, comprenant au moins un dispositif de protection tel que décrit précédemment.

### 2 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre un dispositif de protection selon l'invention ;
- la figure 2 illustre des courbes de calibrage du dispositif de protection selon l'invention ;
- les figures 3A et 3B, présentent respectivement un support capacitif selon l'invention ainsi qu'une coupe de la structure d'un circuit électronique imprimé multicouche ;
- la figure 4 illustre le procédé de protection selon l'invention.
- La figure 5 schématise un terminal de paiement selon l'invention.

### 1 DESCRIPTION DETAILLEE DE L'INVENTION

### 1.1 Rappel du principe de l'invention

L'invention propose de protéger efficacement et simplement les couches d'un circuit imprimé électronique multicouche en utilisant un dispositif de protection mettant en oeuvre une mesure capacitive d'au moins une partie conductrice répartie uniformément sur une couche d'isolant, l'ensemble comprenant la partie conductrice et la couche d'isolant formant un support capacitif présentant un champ électrique uniforme, le support capacitif étant disposé sensiblement sur l'ensemble de la surface d'une des couches du circuit imprimé électronique multicouche.

Comme le dispositif de protection met en oeuvre une mesure capacitive, une intrusion, par court-circuit ou par perçage par exemple, est détectée du fait que l'intrusion modifie la capacité de référence du support capacitif au-delà d'un seuil prédéterminé.

Selon l'invention, le dispositif de protection d'un circuit imprimé électronique comprend un support capacitif, un microprocesseur de mesure capacitive et des moyens de transmission d'une information signalant une variation de la capacité du support capacitif au-delà d'un seuil prédéterminé, signalant en d'autres termes une intrusion d'un tiers malintentionné.

Selon un mode de réalisation de l'invention, le support capacitif est déployé sur une couche du circuit imprimé selon un plan plein.

Selon un autre mode de réalisation, un support capacitif sous la forme d'un treillis est considéré. On peut également considérer un support capacitif sous la forme d'une simple piste de cuivre.

Selon l'invention, le dispositif de protection est apte à protéger un circuit imprimé électronique comprenant plusieurs couches de circuit imprimé superposées et reliées entre elles à l'aide de vias enterrés. Un tel dispositif de protection peut se présenter sous n'importe quelle forme. La forme du dispositif peut être adaptée en fonction du circuit imprimé à protéger.

Par la suite, on présente un mode de réalisation d'un dispositif de protection selon l'invention. Il est clair cependant que l'invention ne se limite pas à cette application particulière, mais peut également être mise en oeuvre dans de nombreux autres contextes de protection de circuits imprimés électroniques et plus généralement dans tous les cas où les caractéristiques listées par la suite sont intéressantes.

### 5.2 Description d'un mode de réalisation d'un dispositif selon l'invention

### Structure du dispositif de protection

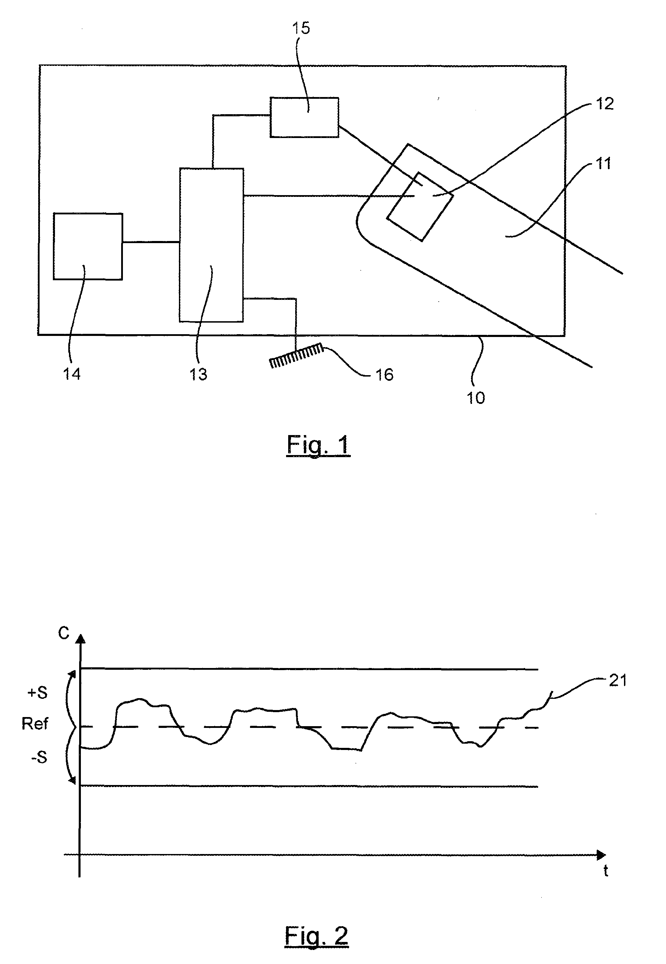

On présente en relation avec la figure 1, un mode de réalisation selon lequel le dispositif de protection 10 comprend tout d'abord un support capacitif 12 correspondant à un plan plein et disposé sur une couche 11 du circuit imprimé électronique d'un terminal de paiement par exemple.

Un support capacitif correspondant à un plan plein, prend la forme d'une surface capacitive. Plus précisément, une technologie capacitive de surface consiste par exemple en un revêtement conducteur uniforme sur un isolant. Lors de l'utilisation, des électrodes placées sur le bord de l'isolant répartissent un courant de faible tension de manière égale sur toute la couche conductrice, créant ainsi un champ électrique uniforme. Lorsqu'un objet entre en contact ou s'approche de la surface, cela a pour effet d'attirer le courant de chaque coin du champ électrique.

De manière optionnelle, un contrôleur calcule les coordonnées du contact en mesurant le courant. Il transmet ensuite ces coordonnées au processeur sécurisé du terminal de paiement.

Par ailleurs, des moyens de calibrage 15, reliés électriquement au support capacitif, permettent d'en évaluer la capacité de référence. Ces moyens de calibrage 15 seront par la suite davantage détaillés.

En outre, le dispositif de protection selon l'invention comprend également un microprocesseur de mesure capacitive 13 relié électriquement au support capacitif 12 et à la masse 16. Un tel microprocesseur de mesure utilise par exemple un capteur capacitif correspondant à une sonde pour mesurer la capacité du support capacitif.

Une telle sonde peut par exemple être réalisée avec une électrode plane de mesure entourée d'un anneau de garde. L'électrode forme alors avec le support capacitif un condensateur plan. Une électrode de garde contenue dans l'anneau de garde est placée autour de celle de mesure et son potentiel est porté à la même valeur afin d'améliorer la linéarité en rendant les lignes de champ normales (perpendiculaires) à l'électrode de mesure. L'électrode de garde permet ainsi d'éliminer les effets de bord.

Grâce à ces moyens de mesure 13, une variation de la capacité du support capacitif est détectée. Cette variation est par exemple obtenue en comparant la capacité mesurée à la capacité de référence déterminée par les moyens de calibrage 15. Cette mesure est préférentiellement effectuée en temps réel afin d'avertir instantanément le processeur sécurisé d'un terminal de paiement via des moyens de transmission 14.

Indépendamment de la fréquence de mesure sélectionnée par l'utilisateur, l'ensemble des mesures est piloté par un programme d'ordinateur enregistré au sein des moyens de mesures.

Plus précisément, les moyens de mesure déterminent une différence entre la capacité du support capacitif mesurée par les moyens de mesure 13, et la capacité de référence préalablement déterminée par les moyens de calibrage. Si la valeur absolue de cette différence excède un seuil prédéterminé S, les moyens de transmission du dispositif de protection selon l'invention signalent au processeur sécurisé du terminal sécurisé de se mettre en mode « *attaque* ».

Ainsi, le dispositif de protection selon l'invention permet de déterminer tout contact ou toutes approche avec le support capacitif disposé sur une couche du circuit imprimé électronique à protéger. En particulier, toute intrusion par un tiers malintentionné sera détectée, du fait que cette intrusion, notamment par coupure, par court-circuit ou encore par grattage modifie de façon significative la capacité du support capacitif.

En outre, ce dispositif de protection tire profit du support capacitif et de la mesure capacitive en évitant de mettre en oeuvre un routage géométrique complexe ou encore en évitant d'utiliser un matériel facilement dégradable.

### Moyens de calibrage du support capacitif considéré

Le calibrage mis en oeuvre par les moyens de calibrage 15, est nécessaire du fait que la valeur de la capacité est sensible.

En effet, il est connu que la valeur de capacité varie en fonction de différents facteurs. Par exemple, la capacité d'un support capacitif varie en fonction de l'hystérésis de charge dû à la magnétisation d'un matériau, l'effet d'une batterie du terminal de paiement, ou encore la température, l'humidité, le vieillissement notamment par oxydation des matériaux constituant le support capacitif, etc.

On présente en relation avec la figure 2, représentant un exemple de courbes de calibrage du dispositif de protection selon l'invention, la procédure mise en oeuvre par les moyens de calibrage délivrant la capacité de référence du support capacitif.

Les moyens de calibrage mesurent 21 (par exemple d'une manière similaire à celle utilisée par les moyens de mesure précédemment décrits) la capacité du support capacitif en fonction du temps. La courbe de mesure 21 représentée sur la figure 2 atteste que la capacité varie en fonction du temps, notamment en fonction de la température environnante.

Les moyens de calibrage moyennent les données de mesure de capacité de la courbe de mesure de sorte qu'une valeur de référence *Ref* est obtenue.

En outre, les moyens de calibrage déterminent par exemple un seuil de variation S de capacité au-delà duquel la variation de capacité est anormale. Ainsi, les moyens de calibrage déterminent la plage de valeur de capacités centrée sur la valeur de référence permettant d'attester un fonctionnement « *normal »* et sécurisé du circuit imprimé du terminal de paiement.

Préférentiellement, la valeur de référence et le seuil prédéterminé S sont enregistrés dans une mémoire et transmis aux moyens de mesure afin que ces derniers déterminent une intrusion d'un tiers malintentionné visant à détériore le circuit imprimé électronique.

De manière optionnelle, les moyens de calibrages comprennent en outre un système de compensation environnemental visant à adapter les valeurs de référence et de seuil prédéterminé S en fonction d'un paramètre sélectionné par l'utilisateur du terminal de paiement.

Par exemple, la température ambiante à Singapour étant très différente de la température à Stockholm, l'utilisateur adapte en fonction de sa localisation la référence et la plage de variation de capacité autorisée.

De même selon un autre exemple, l'utilisateur peut adapter cette plage de variation au fur et à mesure du vieillissement du terminal de paiement, selon des recommandations du constructeur mentionnées dans une notice d'utilisation.

### 5.3 Variantes de réalisation

### Type de support capacitif

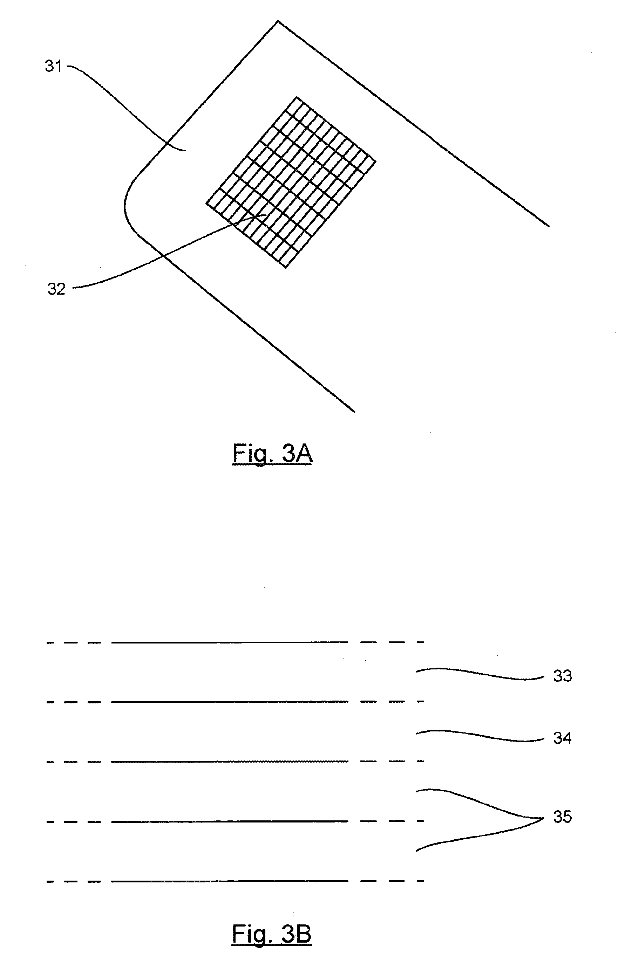

Selon un autre mode de réalisation, le support capacitif peut prendre la forme d'un treillis de fils conducteurs très fins (moins de 10 µm) noyé entre des couches d'isolant par exemple du verre ou des films de plastique laminés, comme illustré par la figure 3A.

Un tel treillis 32 peut être plan ou tridimensionnel avec un maillage plus ou moins dense.

Un support capacitif prenant la forme d'une simple piste (non représentée) de cuivre peut également être utilisée.

Par ailleurs, le dispositif de protection selon l'invention peut également être connecté électriquement à un circuit imprimé possédant un support capacitif existant constitué d'une partie conductrice et d'une partie isolante. Dans ce cas, le dispositif de protection selon l'invention place des électrodes sur le bord de l'isolant afin de répartir un courant de faible tension de manière égale sur toute la partie conductrice, créant ainsi un champ électrique uniforme. Le support existant est par ce biais rendu capacitif.

### Disposition du support capacitif

De manière préférentielle, le support capacitif est sur une couche interne 34 située par exemple directement sous une couche externe 33 portant un plan de masse.

En effet, cette disposition permet notamment de protéger le support capacitif et assure une mesure plus stable de la capacité. Les couches inférieures 35, c'est-à-dire les couches internes situées sous la couche portant le support capacitif, sont en conséquence protégées contre les intrusions de tiers malintentionnés.

Selon une variante de réalisation, le support capacitif peut également être déployé en couche interne « plus profonde », sous réserve d'insérer, sur une couche directement voisine, un plan de masse afin de protéger le support capacitif d'éventuelles perturbations électromagnétiques dues aux circuits électroniques internes (par exemple des pistes) du circuit imprimé électronique multicouche).

Selon le niveau de protection recherché, le nombre de supports capacitifs mis en oeuvre pour un circuit imprimé peut être multiple. Par exemple, chaque couche du circuit imprimé peut porter un support capacitif, afin de déterminer la profondeur de l'intrusion.

Dans ce cas, les moyens de mesures de chaque supports capacitifs peuvent effectuer successivement des mesures de capacité de chaque couche en fonction de la profondeur de la couche considérée.

### 5.4 Description d'un mode de réalisation du procédé de protection selon l'invention

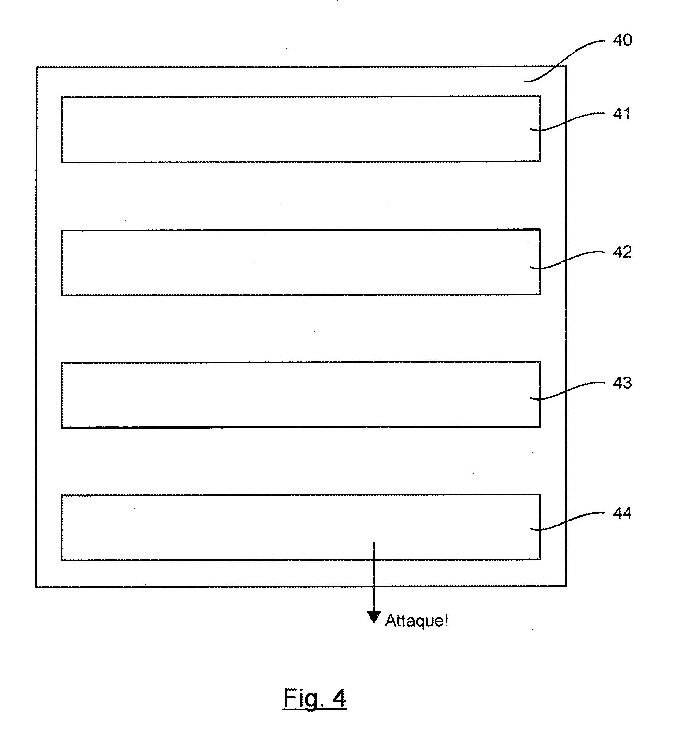

On présente en relation avec la figure 4, le procédé de protection 40 d'un circuit imprimé électronique selon l'invention.

Un tel procédé comprend
- une étape de disposition 41 d'au moins un support capacitif sur une couche du circuit imprimé du terminal de paiement,
- une étape de calibrage 42 délivrant la capacité de référence du support capacitif,
- une étape de mesure capacitive 43 mise en oeuvre par un microprocesseur de mesure capacitive relié électriquement au support capacitif, le microprocesseur étant configuré pour détecter une variation de capacité du support capacitif ;
- une étape de transmission 44 d'une information « *Attaque !* » représentative de la variation de capacité, lorsqu'une valeur absolue d'une différence entre la capacité mesurée et la capacité de référence excède un seuil prédéterminé.

En outre, l'étape de calibrage pourra être réitérée selon une procédure d'utilisation connue de l'utilisateur.

Selon un mode de réalisation particulier, l'étape de calibrage comprend en outre une étape de compensation environnementale, visant à prendre en compte l'influence naturelle de certains paramètres tels que : l'hystérésis de charge dû à la magnétisation d'un matériau, l'effet d'une batterie du terminal de paiement, ou encore la température, l'humidité, le vieillissement notamment par oxydation des matériaux constituant le support capacitif, etc.

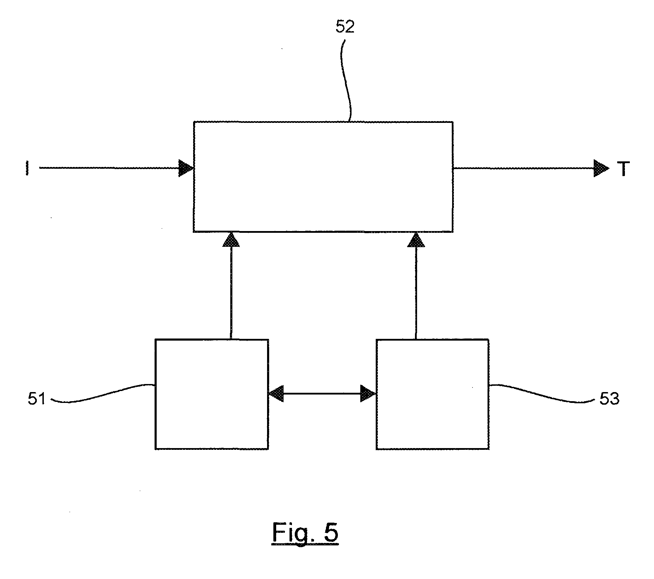

On présente, en relation avec la figure 5, un mode de réalisation d'un terminal de paiement selon l'invention.

Un tel terminal comprend une mémoire 51 constituée d'une mémoire tampon, une unité de traitement 52, équipée par exemple d'un microprocesseur P, et pilotée par le programme d'ordinateur 53, mettant en oeuvre le procédé de protection selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée au moins une information I, telle que des identifiants de zones de localisation. Le microprocesseur de l'unité de traitement 52 met en oeuvre les étapes du procédé de protection décrit précédemment, selon les instructions du programme d'ordinateur 53, pour délivrer une information traitée T, telle que la détection d'une attaque entraînant la suppression des données protégées. Pour cela, le terminal comprend, outre la mémoire tampon 51, au moins un support capacitif disposé sur une couche dudit circuit imprimé, ledit au moins un support capacitif étant configuré pour délivrer une capacité de référence, un microprocesseur de mesure capacitive relié électriquement audit au moins un support capacitif, ledit au moins un microprocesseur étant configuré pour détecter une variation de capacité dudit au moins un support capacitif, des moyens de transmission d'une information représentative de ladite variation de capacité, lorsqu'une valeur absolue d'une différence entre ladite capacité mesurée et ladite capacité de référence excède un seuil prédéterminé.

Ces moyens sont pilotés par le microprocesseur de l'unité de traitement 52.

## Revendications

1. Dispositif de protection (10) d'un circuit imprimé électronique (10), ledit circuit imprimé comprenant au moins deux couches, ledit dispositif comprenant:
- au moins un support capacitif (12) disposé sur une surface d'une couche (11) dudit circuit imprimé, ledit support capacitif étant configuré pour délivrer une capacité de référence;
- un microprocesseur (13) de mesure capacitive relié électriquement audit au moins un support capacitif, ledit microprocesseur étant configuré pour détecter une variation de capacité dudit au moins un support capacitif ;
- des moyens de transmission (14) d'une information représentative de ladite variation de capacité, lorsqu'une valeur absolue d'une différence entre ladite capacité mesurée et ladite capacité de référence (Ref) excède un seuil prédéterminé(s),
**caractérisé en ce que** ledit dispositif de protection comprend en outre:
- au moins une partie conductrice répartie uniformément sur une couche d'isolant, l'ensemble comprenant la partie conductrice et la couche d'isolant formant ledit support capacitif (12) présentant un champ électrique uniforme.

2. Dispositif de protection selon la revendication 1, **caractérisé en ce qu'**il comprend en outre des moyens de calibrage (15) délivrant ladite capacité de référence.

3. Dispositif de protection selon la revendication 1, **caractérisé en ce que** ledit au moins un support capacitif est disposé sur une couche interne dudit circuit imprimé.

4. Dispositif de protection selon la revendication 1, **caractérisé en ce que** ledit au moins un support capacitif est déployé selon un plan plein.

5. Dispositif de protection selon la revendication 1, **caractérisé en ce que** ledit au moins un support capacitif est déployé selon un treillis (32).

6. Procédé de protection d'un circuit imprimé électronique, ledit circuit imprimé comprenant au moins deux couches, ledit procédé comprenant :
- une étape de disposition d'au moins un support capacitif (12) sur une surface d'une couche (11) dudit circuit imprimé, ledit support capacitif étant configuré pour délivrer une capacité de référence;
- une étape de mesure (43) capacitive mise en oeuvre par un microprocesseur de mesure capacitive (13) relié électriquement audit au moins un support de mesure capacitive, ledit microprocesseur étant configuré pour détecter une variation de capacité dudit au moins un support capacitif ;
- une étape de transmission (44) d'une information représentative de ladite variation de capacité, lorsqu'une valeur absolue d'une différence entre ladite capacité mesurée et ladite capacité de référence (Ref) excède un seuil prédéterminé(s),
**caractérisé en ce que** l'étape de disposition comprend également:
- une étape de disposition (41) d'au moins une partie conductrice répartie uniformément sur une couche d'isolant, l'ensemble comprenant la partie conductrice et la couche d'isolant formant ledit support capacitif présentant un champ électrique uniforme.

7. Procédé de protection selon la revendication 6, **caractérisé en ce qu'**il comprend en outre une étape de calibrage (42) délivrant ladite capacité de référence.

8. Terminal de paiement, **caractérisé en ce qu'**il comprend un dispositif de protection selon la revendication 1.

## Patentansprüche

1. Schutzvorrichtung (10) für eine gedruckte elektronische Schaltung (10), wobei die gedruckte Schaltung mindestens zwei Schichten umfasst, wobei die Vorrichtung Folgendes umfasst:
- mindestens einen kapazitiven Träger (12), der auf einer Fläche einer Schicht (11) der gedruckten Schaltung angeordnet ist, wobei der kapazitive Träger derart konfiguriert ist, dass er eine Referenzkapazität liefert;
- einen Mikroprozessor (13) zum kapazitiven Messen, der elektrisch mit dem mindestens einen kapazitiven Träger verbunden ist, wobei der Mikroprozessor derart konfiguriert ist, dass er eine Kapazitätsänderung des mindestens einen kapazitiven Trägers erfasst;
- Mittel (14) zur Übertragung einer Information, die für die Kapazitätsänderung repräsentativ ist, wenn ein Absolutwert einer Differenz zwischen der gemessenen Kapazität und der Referenzkapazität (Ref) eine vorbestimmte Schwelle (S) überschreitet,
**dadurch gekennzeichnet, dass** die Schutzvorrichtung ferner Folgendes umfasst:
- mindestens einen leitenden Teil, der einheitlich auf einer Isolierschicht verteilt ist, wobei die den leitenden Teil und die Isolierschicht umfassende Einheit den kapazitiven Träger (12) bildet, der ein einheitliches elektrisches Feld aufweist.

2. Schutzvorrichtung nach Anspruch 1, **dadurch gekennzeichnet, dass** sie ferner Kalibriermittel (15) umfasst, die die Referenzkapazität liefern.

3. Schutzvorrichtung nach Anspruch 1, **dadurch gekennzeichnet, dass** der mindestens eine kapazitive Träger auf einer inneren Schicht der gedruckten Schaltung angeordnet ist.

4. Schutzvorrichtung nach Anspruch 1, **dadurch gekennzeichnet, dass** der mindestens eine kapazitive Träger gemäß einer vollen Ebene ausgelegt ist.

5. Schutzvorrichtung nach Anspruch 1, **dadurch gekennzeichnet, dass** der mindestens eine kapazitive Träger gemäß einem Gitter (32) ausgelegt ist.

6. Verfahren zum Schutz einer gedruckten elektronischen Schaltung, wobei die gedruckte Schaltung mindestens zwei Schichten umfasst, wobei das Verfahren Folgendes umfasst:
- einen Schritt der Anordnung mindestens eines kapazitiven Trägers (12) auf einer Fläche einer Schicht (11) der gedruckten Schaltung, wobei der kapazitive Träger derart konfiguriert ist, dass er eine Referenzkapazität liefert;
- einen Schritt des kapazitiven Messens (43), der durch einen elektrisch mit dem mindestens einen kapazitiven Träger verbundenen Mikroprozessor zum kapazitiven Messen (13) umgesetzt wird, wobei der Mikroprozessor derart konfiguriert ist, dass er eine Kapazitätsänderung des mindestens einen kapazitiven Trägers erfasst;
- einen Schritt der Übertragung (44) einer Information, die für die Kapazitätsänderung repräsentativ ist, wenn ein Absolutwert einer Differenz zwischen der gemessenen Kapazität und der Referenzkapazität (Ref) eine vorbestimmte Schwelle (S) überschreitet,
**dadurch gekennzeichnet, dass** der Schritt der Anordnung auch umfasst:
- einen Schritt der Anordnung (41) mindestens eines leitenden Teils, der einheitlich auf der Isolierschicht verteilt ist, wobei die den leitenden Teil und die Isolierschicht umfassende Einheit den kapazitiven Träger bildet, der ein einheitliches elektrisches Feld aufweist.

7. Schutzverfahren nach Anspruch 6, **dadurch gekennzeichnet, dass** es ferner einen Kalibrierschritt (42) umfasst, welcher die Referenzkapazität liefert.

8. Zahlungsterminal, **dadurch gekennzeichnet, dass** er eine Schutzvorrichtung nach Anspruch 1 umfasst.

## Claims

1. Device for protecting (10) an electronic printed circuit board, said electronic printed circuit board comprising at least two layers, said device comprising:
- at least one capacitive support (12) positioned on a surface of one layer (11) of said electronic printed circuit board, said capacitive support being configured to deliver a reference capacitance;
- a capacitive measurement microprocessor (13) electrically connected to said at least one capacitive support, said microprocessor being configured to detect a variation in capacitance of said at least one capacitive detector;
- means for transmitting (14) a piece of information representing said variation of capacitance, when an absolute value of a difference between said measured capacitance and said reference capacitance (Ref) exceeds a predetermined threshold (S),
**characterized in that** said device further comprises :
- at least one conductive part uniformly spread on an insulator layer, the entirety comprising the conductive part and the insulator layer forming said capacitive support (12) presenting a uniform electrical field.

2. Device for protecting according to claim 1, **characterized in that** it further comprises calibration means delivering said reference capacitance.

3. Device for protecting according to claim 1, **characterized in that** said at least one capacitive support is positioned on an internal layer of said printed circuit.

4. Device for protecting according to claim 1, **characterized in that** said first at least one capacitive support is deployed in a full plane.

5. Device for protecting according to claim 1, **characterized in that** said at least one capacitive support is deployed as a lattice.

6. Method for protecting an electronic printed circuit board, said printed circuit comprising at least two layers, said method comprising:
- a step for laying out at least one capacitive support on a surface of one layer (11) of said printed circuit board, said capacitive support being configured to deliver a reference capacitance;
- a capacitive measurement step (43) implemented by a capacitive measurement microprocessor electrically connected to said at least one capacitive support, said at least one microprocessor being configured to detect a variation in capacitance of said at least one capacitive support;
- a step for transmitting (44) a piece of information representing said variation of capacitance when an absolute value of a difference between said measured capacitance and said reference capacitance exceeds a predetermined threshold,
**characterized in that** said step for laying out further comprises:
- a step for laying out (41) at least one conductive part uniformly spread on an insulator layer, the entirety comprising the conductive part and the insulator layer forming said capacitive support presenting a uniform electrical field.

7. Method for protecting according to claim 6, **characterized in that** it further comprises a calibration step (42) delivering said reference capacitance.

8. Payment terminal **characterized in that** it comprises a device for protecting according to claim 1.
